# FASCICULE DE BREVET EUROPEEN

(11) **EP 1 406 502 B1**
(45) Date de publication et mention de la délivrance du brevet: **12.04.2006**
(21) Numéro de dépôt: 02764949.0
(22) Date de dépôt: 08.07.2002
(51) Int. Cl.: A23B 7/06, A23B 7/154, A23B 7/157, A23L 3/349

(54) **PROCEDE DE TRAITEMENT DE FRUITS ET LEGUMES PAR IMMERSION ET INSTALLATION CORRESPONDANTE**
VERFAHREN ZUR BEHANDLUNG VON FRÜCHTEN UND GEMÜSEN DURCH TAUCHUNG UND VORRICHTUNG DAZU
METHOD FOR PROCESSING FRUITS AND VEGETABLES BY IMMERSION AND CORRESPONDING INSTALLATION

(30) Priorité: 18.07.2001 FR 0109627
(43) Date de publication de la demande: 14.04.2004
(73) Titulaire: XEDA INTERNATIONAL, 13670 Saint-Andiol (FR)
(72) Inventeur: SARDO, Alberto, F-13160 Chateaurenard (FR)
(74) Mandataire: Domenego, Bertrand
(86) Numéro de dépôt international: PCT/FR2002/002389
(87) Numéro de publication internationale: WO 2003/007723

(56) Documents cités:
- EP-A- 0 972 450
- EP-A- 1 033 077
- FR-A- 2 786 664
- FR-A- 2 790 193
- US-A- 241 631
- US-A- 2 124 460
- US-A- 2 454 706
- US-A- 2 622 031
- US-A- 3 786 917
- US-A- 3 976 028

## Description

L'invention concerne un procédé de traitement de fruits ou légumes du type comprenant les étapes consistant à :
- fournir un bain d'une composition traitante,
- placer les fruits ou légumes dans des moyens de retenue,
- abaisser les moyens de retenue pour immerger complètement les fruits ou légumes dans le bain,
- soulever les moyens de retenue pour retirer complètement les fruits ou légumes du bain.

L'invention s'applique; par exemple, au traitement des pommes et des poires.

Il importe que les fruits et légumes ne perdent pas leur qualité organoleptique et conservent un aspect engageant lors de leur mise sur le marché pour une consommation rapide.

Or, après leur récolte, les fruits et légumes sont couramment stockés pendant des périodes relativement longues avant d'être mis sur le marché.

Les phénomènes susceptibles d'altérer l'aspect et le goût des fruits et légumes sont notamment la prolifération de champignons et de bactéries à leur surface. Ces détériorations sont encore plus rapides au niveau des micro-blessures et des entailles apparaissant sur la peau au cours du stockage ou de la manipulation des fruits et légumes.

Un autre phénomène susceptible d'endommager les fruits et légumes est le phénomène d'échaudure qui se manifeste par un noircissement de la peau des fruits et légumes touchés.

Pour prévenir ces phénomènes, il est connu d'utiliser des procédés du type précité avec comme compositions traitantes des compositions aqueuses comme décrit dans FR-2 786 664 qui correspond au préambule de la revendication 1.

EP-1 033 077, EP-972 450, FR-2 790 193 et US-5 858 436 décrivent des compositions analogues.

US-2 622 031 décrit par ailleurs un procédé dans lequel on trempe de manière répétée des poissons dans une composition d'acide maléique pour former une couche de glace à leur surface.

US-241 631 décrit un récipient culinaire dont un panier peut être émergé.

US-2 454 706 décrit une installation pour refroidir des produits en les immergeant et en les émergeant totalement d'un liquide réfrigérant.

Les moyens de retenue sont généralement constitués par des caisses/palettes fermées par des couvercles. Les fonds, les parois latérales et les couvercles de ces caisses/palettes sont ajourés pour permettre à la composition traitante de baigner les fruits ou légumes à traiter.

Lorsque les fruits ou légumes contenus dans une caisse/palette sont complètement immergés, ils s'accumulent soit au fond de la caisse/palette, si leur densité est supérieure à celle de la composition aqueuse traitante, soit sous le couvercle de la caisse/palette, si leur densité est inférieure à celle de la composition aqueuse traitante. Quoiqu'il en soit, on constate, à l'issue du procédé de traitement que les points de contact entre les fruits et légumes n'ont pas été traités.

Un but de l'invention est de résoudre ce problème en fournissant un procédé du type précité qui permette de traiter de manière plus homogène la surface des fruits ou légumes.

A cet effet, l'invention a pour objet un procédé selon la revendication 1.

Selon des modes particuliers de réalisation, le procédé peut comprendre l'une ou plusieurs des caractéristiques des revendications 2 à 10.

L'invention a en outre pour objet une installation selon la revendication 11.

La revendication 12 concerne un mode particulier de réalisation de l'installation.

L'invention a en outre pour objet une installation selon la revendication 11.

La revendication 12 concerne un mode particulier de réalisation de l'installation.

L'invention sera mieux comprise à la lecture de la description qui va suivre, donnée uniquement à titre d'exemple, et faite en se référant aux dessins annexés, sur lesquels :
- la figure 1 est une vue schématique latérale d'une installation de traitement de fruits ou légumes selon l'invention ;
- les figures 2 et 3 sont des vues partielles, schématiques, latérales et agrandies, illustrant deux étapes intermédiaires successives du procédé mis en oeuvre par l'installation de la figure 1.

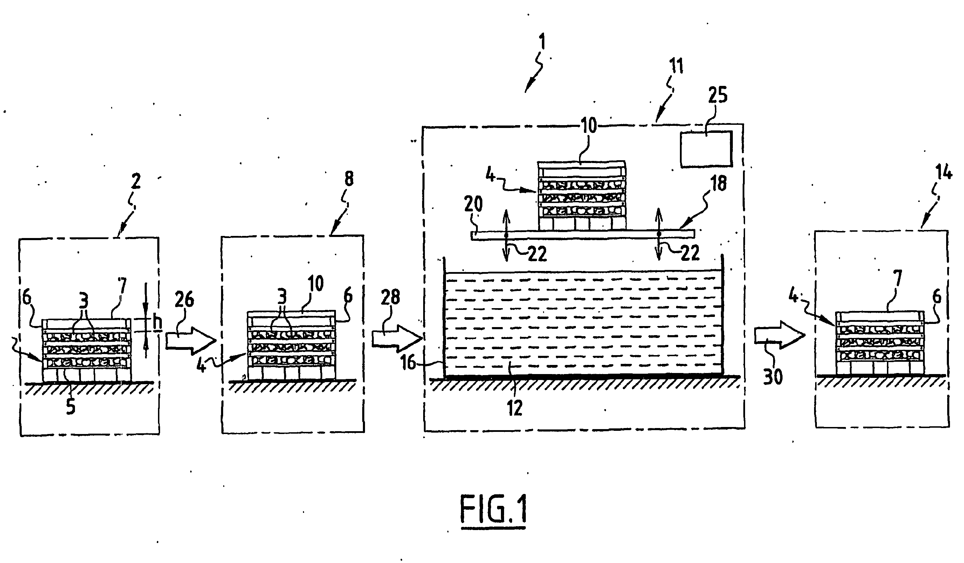

La figure 1 illustre schématiquement une installation 1 de traitement de fruits ou légumes qui comprend essentiellement :
- un premier poste 2 de conditionnement de fruits ou légumes 3 dans des caisses/palettes 4 à fond 5 et à parois latérales 6 ajourés, chaque caisse/palette 4 étant remplie en laissant, sous les extrémités supérieures 7 des parois latérales 6, une hauteur h libre de fruits ou légumes 3,
- un deuxième poste 8 de fermeture des caisses/palettes 4 par des couvercles supérieurs 10 ;
- un troisième poste 11 d'immersion des caisses/palettes 4 dans une composition traitante 12 ; et
- un quatrième poste 14 de retrait des couvercles 10 des caisses/palettes 4.

Plus précisément, le troisième poste 11 comprend un bac 16, dans lequel un bain de la composition 12 est formé, et des moyens 18 d'abaissement et de soulèvement des caisses/palettes 4.

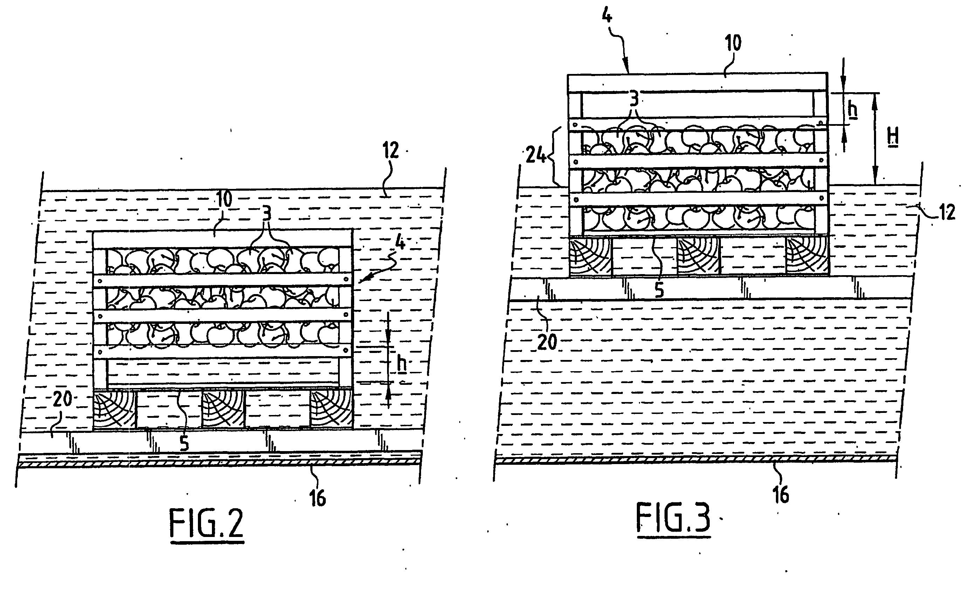

Ces moyens 18 comprennent par exemple un plateau 20 de support des caisses/palettes 4 et des moyens 22 de déplacement vertical de ce plateau 20. Le plateau 20 est ainsi mobile verticalement entre une position basse (figure 2), dans laquelle une caisse/palette 4 portée par le plateau 20 et les fruits ou légumes 3 qu'elle contient sont totalement immergés dans la composition 12, et une position haute (figure 1), dans laquelle la caisse/palette 4 et les fruits ou légumes 3 qu'elle contient sont situés au-dessus du bain de la composition 12.

On notera que, dans la position basse, la caisse/palette 4 peut être immergée d'une hauteur environ 10 cm mesurée entre la surface de la composition traitante 12 et son couvercle 10. Dans une variante, le couvercle 10 peut affleurer la surface de la composition traitante 12.

Entre ces deux positions, le plateau 20 peut occuper une position intermédiaire dans laquelle une partie 24 des fruits ou légumes 3 contenus dans la caisse/palette 4 qu'il porte émergent du bain, comme on le voit sur la figure 3.

Le troisième poste 11 comprend en outre une unité électronique 25 de commande des moyens 22 de déplacement. L'unité 25 comprend un microprocesseur et des moyens de stockage dans lesquels un programme permettant la mise en oeuvre des étapes décrites ultérieurement est stocké.

Le procédé de traitement mis en oeuvre par l'installation 1 va être maintenant décrit à titre d'exemple pour une seule caisse/ palette 4 contenant des pommes 3. La composition 12 utilisée est, à titre d'exemple, simplement constituée d'eau ou ne contient essentiellement que de l'eau. Dans le cadre de l'invention, on entend par contenir essentiellement de l'eau contenir plus de 95% d'eau, mieux encore plus de 98% d'eau.

La caisse/palette 4 est remplie de pommes 3 dans le premier poste 2.

Comme illustré par la flèche 26 sur la figure 1, cette caisse/palette 4 remplie est ensuite transférée vers le deuxième poste 8 où elle est fermée par un couvercle 10. Ce couvercle 10 est par exemple ajouré tout comme le reste de la caisse/palette 4. Ce couvercle 10 est fixé rigidement aux parois latérales 6 de la caisse/palette 4.

La caisse/palette 4 fermée par le couvercle 10 est ensuite transférée vers le troisième poste 11, comme schématisé par la flèche 28. La caisse/palette 4 est alors placée sur le plateau 20 qui est en position haute.

Le plateau 20 est ensuite abaissé, grâce aux moyens de déplacement 22 commandés par l'unité 25, vers sa position basse illustrée par la figure 2. Les pommes 3 conditionnées dans la caisse/palette 4 sont alors complètement immergées dans la composition 12.

La densité des pommes 3 étant inférieure à 1 et donc à celle de la composition aqueuse traitante 12, les pommes ont tendance à flotter et s'accumulent donc contre le couvercle 10 de la caisse/palette 4, en laissant une hauteur h libre de pommes 3 à proximité du fond 5 de la caisse/palette 4.

La caisse/palette 4 est maintenue dans cette position basse pendant une durée de traitement prédéterminée. Le plateau 20 est ensuite soulevé, grâce aux moyens 22 de déplacement commandés par l'unité 25, vers sa position intermédiaire représentée à la figure 3. La caisse/palette 4 émerge alors d'une hauteur H du bain de la composition 12.

La hauteur H est telle que, compte tenu de la hauteur h, le poids des pommes 3 émergées est supérieur à la poussée d'Archimède subie par les pommes 3 encore immergées. Les pommes 3 s'accumulent donc au fond 5 de la caisse/palette 4, en laissant une hauteur h libre de pommes 3 à proximité du couvercle 10.

Ensuite, les moyens 22 de déplacement commandés par l'unité 25 provoquent à nouveau l'abaissement du plateau 20 et de la caisse/palette 4 jusqu'à la position basse de la figure 2.

La caisse/palette 4 est à nouveau maintenue dans cette position pendant la durée de traitement prédéterminée puis soulevée vers la position intermédiaire et ainsi de suite.

Ainsi, la caisse/palette 4 est soumise à un cycle d'immersion complète/retrait partiel du bain, ce cycle étant reproduit de façon continue et régulière.

Pendant la reproduction de ce cycle, les pommes 3 s'accumulent alternativement contre le fond 5 ou contre le couvercle 10 de la caisse/palette 4 de sorte que leurs positions relatives et leurs points de contact sont modifiés entre chaque phase de traitement des pommes 3.

Enfin, le plateau 20 est ramené vers sa position haute de la figure 1 puis on transfère la caisse/palette 4 vers le quatrième poste 14, comme illustré par la flèche 30. Le couvercle 10 est alors retiré de la caisse/palette 4 et les pommes 3 sont éventuellement séchées à température ambiante ou à une température supérieure, éventuellement sous ventilation d'air.

Les positions relatives et les points de contact entre les pommes 3 étant modifiés entre deux immersions complètes successives, leurs surfaces sont traitées de manière relativement homogène au cours de l'ensemble du traitement.

Par ailleurs, ces modifications de positions relatives sont obtenues grâce aux effets de la force de gravité et de la poussée d'Archimède auxquelles les pommes 3 sont soumises.

Ainsi, les pommes 3 ne sont pas soumises à des déplacements brusques susceptibles de provoquer leur endommagement.

De manière générale, le procédé décrit peut s'appliquer au traitement de tous fruits et légumes et le retrait intermédiaire des fruits ou légumes 3 du bain peut ne pas être partiel, comme décrit, mais complet.

Le nombre d'exécution du cycle d'immersion complète/retrait au moins partiel du bain est tel que le temps total d'immersion complète des fruits ou légumes 3 permet un traitement efficace de ceux-ci. Généralement, un temps total d'immersion complète inférieur à 10 minutes suffit.

Le cycle a généralement une période, ou durée, comprise entre 2 secondes et 2 minutes. Dans chaque cycle, la phase d'immersion complète peut durer entre 1,5 secondes et 1 minute 50 secondes, le reste du cycle étant consacré au soulèvement et à l'abaissement de la caisse/palette 4 sans temps d'arrêt particulier.

De manière générale, la composition traitante peut être une composition aqueuse et/ou contenir un principe actif antioxydant et/ou fongicide.

De manière préférée, le principe actif incorporé à la composition traitante est choisi parmi l'eugénol, un sel acceptable sur le plan alimentaire de l'eugénol, l'isoeugénol, un sel acceptable sur le plan alimentaire de l'isoeugénol, et leurs mélanges.

Comme sel acceptable sur le plan alimentaire de l'eugénol ou de l'isoeugénol, on peut citer les sels de métaux alcalins et notamment les sels de sodium et de potassium.

Les fruits ou légumes 3 peuvent alors, après retrait du couvercle 10 et séchage dans le quatrième poste 14, être rincés, par exemple par douchage ou pulvérisation d'une solution de rinçage telle qu'une solution aqueuse et notamment une solution essentiellement constituée d'eau.

Lorsque les fruits ou légumes 3 à traiter sont des pommes et que la composition traitante 12 est essentiellement constituée d'eau, les fruits ou légumes 3 ont une densité inférieure à celle de la composition 12, comme indiqué ci-dessus.

Toutefois, il peut être nécessaire pour traiter d'autres fruits et légumes 3 d'augmenter la densité de la composition traitante pour qu'elle soit supérieure à celle des fruits ou légumes. C'est notamment le cas pour les poires. Dans ce cas, la composition traitante 12 comprend avantageusement un ou plusieurs agents d'augmentation de sa densité.

De tels agents sont notamment des sels choisis parmi les silicates de métaux alcalins ou de métaux alcalino-terreux ; les phosphates de métaux alcalins ou de métaux alcalino-terreux ; les bicarbonates de métaux alcalins ou alcalino-terreux ; les carbonates de métaux alcalins ou alcalino-terreux ; les sulfonates de métaux alcalins ou alcalino-terreux ; et leurs mélanges. Les sels de métaux alcalins sont préférés.

On préfère notamment avoir recours au silicate de sodium, au bicarbonate de sodium ou de potassium, au carbonate de sodium ou de potassium, au lignine-sulfonate de calcium, au pyrophosphate de potassium ou au métaphosphate de potassium.

Plus particulièrement, on sélectionnera l'agent destiné à augmenter la densité de la composition traitante 12 parmi le métaphosphate de potassium et mieux encore le pyrophosphate de potassium.

Ainsi, selon un mode de réalisation particulièrement préféré, la composition traitante 12 est une solution aqueuse comprenant :
- de l'eugénol, un sel acceptable sur le plan alimentaire de l'eugénol, ou leurs mélanges, avec une teneur de 500 à 5000 ppm ; et
- 1 à 3% de masse d'un sel choisi parmi le pyrophosphate de potassium, le métaphosphate de potassium, et leurs mélanges.

De manière préférée, la température de la composition traitante 12 sera maintenue pendant le traitement des fruits et légumes 3 entre 40 et 60° C, préférablement entre 45 et 55° C, mieux encore entre 48 et 52° C, par exemple à 50° C.

Dans ce cas, une durée globale d'immersion complète inférieure à 5 minutes suffit généralement A ces températures, cette durée peut n'être que de 2 à 3 minutes, et ceci dans la plupart des cas.

On notera par ailleurs que d'autres contenants que des caisses/palettes 4 peuvent être utilisés pour autant qu'ils puissent retenir les fruits ou légumes contre l'effet de la gravité et de la poussée d'Archimède et permettent à la composition traitante de les baigner.

En outre, le plateau 20 peut être remplacé par un autre support ou être muni de rouleaux permettant de déplacer par poussée latérale les caisses/palettes 4 sur le plateau 20, d'une extrémité de chargement à une extrémité de déchargement. Ainsi, le procédé décrit peut être mis en oeuvre en continu dans l'installation 1.

De manière plus générale, on a constaté que l'homogénéité du traitement de la surface des fruits ou légumes 3 peut être améliorée même si leur densité est supérieure à celle de la composition 12, le simple fait d'émerger au moins une partie des fruits ou légumes 3 avant de les replonger dans la composition 12 permettant de modifier suffisamment leurs positions relatives dans les caisses/palettes 4.

De manière plus générale encore, un seul retrait intermédiaire des fruits ou légumes 3 entre une première immersion complète et une seconde et dernière immersion complète peut également améliorer l'homogénéité du traitement.

## Revendications

1. Procédé de traitement de fruits ou légumes (3) du type comprenant les étapes consistant à :
- fournir un bain d'une composition traitante (12) présentant une température comprise entre 40 et 60° C,
- placer les fruits ou légumes (3) dans des moyens (4) de retenue,
- abaisser les moyens (4) de retenue pour immerger complètement les fruits ou légumes (3) dans le bain,
- soulever les moyens (4) de retenue pour retirer complètement les fruits ou légumes du bain,
**caractérisé en ce qu'**il comprend, après immersion complète des fruits ou légumes (3) et avant leur retrait du bain, les étapes intermédiaires consistant à :
- soulever les moyens (4) de retenue pour qu'une partie des fruits ou légumes (3) qui y sont contenus émerge du bain et qu'une autre partie des fruits ou légumes (3) qui y sont contenus reste immergée, et
- abaisser les moyens (4) de retenue pour immerger à nouveau complètement les fruits ou légumes (3) qu'ils contiennent dans le bain.

2. Procédé selon la revendication 1, **caractérisé en ce que** les étapes intermédiaires sont reproduites suivant un cycle de période comprise entre 2 secondes et 2 minutes.

3. Procédé selon la revendication 1 ou 2, **caractérisé en ce que** la composition traitante (12) est essentiellement constituée d'eau.

4. Procédé selon l'une des revendications précédentes, **caractérisé en ce que** la composition traitante (12) comprend au moins un principe actif choisi parmi l'eugénol, un sel de l'eugénol acceptable sur le plan alimentaire, l'isoeugénol, un sel de l'isoeugénol acceptable sur le plan alimentaire, et leurs mélanges.

5. Procédé selon l'une des revendications précédentes, **caractérisé en ce que** la densité de la composition traitante est supérieure à celle des fruits ou légumes à traiter, et **en ce que**, lors de l'étape intermédiaire de soulèvement des moyens (4) de retenue, le poids des fruits ou légumes (3) émergés est supérieur à la poussée d'Archimède s'exerçant sur les fruits ou légumes (3) encore immergés.

6. Procédé selon la revendication 5, **caractérisé en ce que** la composition traitante (12) comprend un agent d'augmentation de sa densité.

7. Procédé selon la revendication 6, **caractérisé en ce que** l'agent d'augmentation de la densité est choisi parmi un silicate de métal alcalin, un phosphate de métal alcalin, un bicarbonate de métal alcalin, un carbonate de métal alcalin ou un sulfonate de métal alcalin.

8. Procédé selon la revendication 6, **caractérisé en ce que** l'agent d'augmentation de la densité est un phosphate de potassium tel que le pyrophosphate de potassium ou le métaphosphate de potassium.

9. Procédé selon l'une des revendications précédentes, **caractérisé en ce que** la composition traitante contient un principe actif antioxydant et/ou antifongique.

10. Procédé selon l'une quelconque des revendications précédentes,
**caractérisé en ce que** le temps total d'immersion complète des fruits ou légumes (3) dans la composition traitante est inférieur à 10 minutes.

11. Installation pour la mise en oeuvre d'un procédé selon l'une des revendications précédentes, **caractérisée en ce qu'**elle comprend :
- des moyens de conditionnement des fruits ou légumes dans des moyens (4) de retenue,
- des moyens (16) de formation d'un bain d'une composition traitante (12) présentant une température comprise entre 40 et 60° C,
- des moyens (18) d'abaissement et de soulèvement des moyens (4) de retenue, et
- une unité électronique de commande des moyens (18) d'abaissement et de soulèvement adaptée, d'une part pour commander des étapes consistant à :
- abaisser les moyens (4) de retenue pour immerger complètement les fruits ou légumes (3) qui y sont contenus dans le bain, et
- soulever les moyens (4) de retenue pour retirer complètement les fruits ou légumes (3) du bain, et d'autre part pour commander entre ces deux étapes des étapes intermédiaires consistant à :
- soulever les moyens (4) de retenue pour qu'une parüe des fruits ou légumes (3) qui y sont contenus émerge du bain et qu'une autre partie des fruits ou légumes (3) qui y sont contenus reste immergée, et
- abaisser les moyens (4) de retenue pour immerger à nouveau complètement les fruits ou légumes (3) qu'ils contiennent dans le bain.

12. Installation selon la revendication 11, **caractérisée en ce que** l'unité de commande est adaptée pour commander la reproduction des étapes intermédiaires suivant un cyde de période comprise entre 2 secondes et 2 minutes.

## Patentansprüche

1. Verfahren zur Behandlung von Früchten oder Gemüsen (3) des Typs, welches die Stufen umfaßt, die bestehen aus:
- Bereitstellen eines Bades einer Behandlungszusammensetzung (12), das eine Temperatur zwischen 40 und 60°C aufweist,
- Anordnen der Früchte oder Gemüse (3) in Haltemitteln (4),
- Absenken der Haltemittel (4) zum vollständigen Eintauchen der Früchte oder Gemüse (3) in das Bad,
- Hochheben der Haltemittel (4) zum vollständigen Herausziehen der Früchte oder Gemüse aus dem Bad,
**dadurch gekennzeichnet, daß** es umfaßt, nach vollständigem Eintauchen der Früchte oder Gemüse (3) und vor ihrem Herausziehen aus dem Bad, die Zwischenstufen, welche bestehen aus:
- Hochheben der Haltemittel (4), damit nur ein Teil der Früchte oder Gemüse (3), die hierin enthalten sind, aus dem Bad auftaucht, und damit ein anderer Teil der Früchte oder Gemüse (3), die hierin enthalten sind, eingetaucht bleibt, und
- Absenken der Haltemittel (4), um erneut die Früchte oder Gemüse (3), die sie enthalten, vollständig in das Bad einzutauchen.

2. Verfahren gemäß Anspruch 1, **dadurch gekennzeichnet, daß** die Zwischenstufen mit einen Zeitzyklus zwischen 2 Sekunden und 2 Minuten wiederholt werden.

3. Verfahren gemäß Anspruch 1 oder 2, **dadurch gekennzeichnet, daß** die Behandlungszusammensetzung (12) im wesentlichen aus Wasser gebildet wird.

4. Verfahren gemäß einem der vorhergehenden Ansprüche, **dadurch gekennzeichnet, daß** die Behandlungszusammensetzung (12) wenigstens ein aktives Mittel, ausgewählt unter Eugenol, einem auf dem Nahrungsmittelgebiet annehmbaren Salz von Eugenol, Isoeugenol, einem auf dem Nahrungsmittelgebiet annehmbaren Salz von Isoeugenol und deren Mischungen, umfaßt.

5. Verfahren gemäß einem der vorhergehenden Ansprüche, **dadurch gekennzeichnet, daß** die Dichte der Behandlungszusammensetzung oberhalb derjenigen der zu behandelnden Früchte oder Gemüse liegt, und daß bei der Zwischenstufe des Hochhebens von Haltemitteln (4) das Gewicht der aufgetauchten Früchte oder Gemüse (3) oberhalb der Kraft des Archmimedischen Auftriebes liegt, die auf die noch eingetauchten Früchte oder Gemüse (3) ausgeübt wird.

6. Verfahren gemäß Anspruch 5, **dadurch gekennzeichnet, daß** die Behandlungszusammensetzung ein Mittel zur Erhöhung der Dichte umfaßt.

7. Verfahren gemäß Anspruch 6, **dadurch gekennzeichnet, daß** das Mittel zur Erhöhung der Dichte ausgewählt ist unter einem Alkalimetallsilikat, einem Alkalimetallphosphat, einem Alkalimetallbikarbonat, einem Alkalimetallkarbonat oder einem Alkalimetallsulfonat.

8. Verfahren gemäß Anspruch 6, **dadurch gekennzeichnet, daß** das Mittel zur Erhöhung der Dichte ein Kaliumphosphat wie Kaliumpyrophosphat oder Kaliummetaphosphat ist.

9. Verfahren gemäß einem der vorhergehenden Ansprüche, **dadurch gekennzeichnet, daß** die Behandlungszusammensetzung ein aktives Antioxydationsmittel und/oder Antipilzmittel enthält.

10. Verfahren gemäß irgendeinem der vorhergehenden Ansprüche, **dadurch gekennzeichnet, daß** die Gesamtzeit des vollständigen Eintauchens der Früchte oder Gemüse (3) in die Behandlungszusammensetzung unter 10 Minuten liegt.

11. Vorrichtung zur Durchführung eines Verfahrens gemäß einem der vorhergehenden Ansprüche, **dadurch gekennzeichnet, daß** sie umfaßt:
- Mittel zum Einpacken von Früchten oder Gemüsen in Haltemittel (4),
- Mittel (16) zur Bildung eines Bades einer Behandlungszusammensetzung (12), die eine Temperatur zwischen 40 und 60 °C aufweist,
- Mittel (18) zum Absenken und zum Hochheben der Haltemittel (4), und
- eine elektronische Steuereinrichtung für Mittel (18) zum Absenken und Hochheben), ausgelegt einerseits zum Steuern von Stufen, die bestehen aus:
- Absenken der Haltemittel (4) zum vollständigen Eintauchen der Früchte oder Gemüse (3), die hierin enthalten sind, in das Bad, und
- Hochheben der Haltemittel (4) zum vollständigen Herausziehen der Früchte oder Gemüse (3) aus dem Bad, und andererseits zum Steuern zwischen diesen beiden Stufen von Zwischenstufen, die bestehen aus:
- Hochheben der Haltemittel (4), damit nur ein Teil der Früchte oder Gemüse (3), die hierin enthalten sind, aus dem Bad auftaucht, und damit ein anderer Teil der Früchte oder Gemüse (3), die hierin enthalten sind, eingetaucht bleibt, und
- Absenken der Haltemittel (4) zum erneuten vollständigen Eintauchen der Früchte oder Gemüse (3), die sie enthalten, in das Bad.

12. Vorrichtung gemäß Anspruch 11, **dadurch gekennzeichnet, daß** die Steuereinheit ausgelegt ist, um die Wiederholung der Zwischenstufen entsprechend einem Zeitzyklus zwischen 2 Sekunden und 2 Minuten zu steuern.

## Claims

1. Process for the treatment of fruits or vegetables (3) of the type including stages comprising:
- providing a bath of treatment composition (12) having a temperature between 40 and 60°C,
- placing the fruits or vegetables (3) in containment means (4),
- lowering the containment means (4) to immerse the fruits or vegetables (3) fully in the bath,
- lifting the containment means (4) to completely remove the fruits or vegetables from the bath,
**characterised in that** it comprises intermediate stages after full immersion of the fruits or vegetables (3) and before their removal from the bath comprising:
- lifting the containment means (4) so that part of the fruits or vegetables (3) contained therein emerge from the bath and another part of the fruits or vegetables (3) contained therein remain immersed, and
- lowering the containment means (4) to again fully immerse the fruits or vegetables (3) contained therein into the bath.

2. Process according to claim 1, **characterised in that** the intermediate stages are reproduced in accordance with a cycle having a period of between 2 seconds and 2 minutes.

3. Process according to claim 1 or 2, **characterised in that** the treatment composition (12) essentially comprises water.

4. Process according to any of the preceding claims, **characterised in that** the treatment composition (12) comprises at least one active ingredient selected from eugenol, a salt of eugenol which is acceptable for food use, isoeugenol, a salt of isoeugenol which is acceptable for food use, and mixtures thereof.

5. Process according to any one of the preceding claims, **characterised in that** the density of the treatment composition is greater than that of the fruits or vegetables being treated, and **in that** during the intermediate stage in which the containment means (4) are lifted the weight of the fruit or vegetables (3) which have emerged is greater than the Archimedes thrust acting on the fruits or vegetables (3) which are still immersed.

6. Process according to claim 5, **characterised in that** the treatment composition (12) comprises an agent for increasing its density.

7. Process according to claim 6, **characterised in that** the density-increasing agent is selected from an alkali metal silicate, an alkali metal phosphate, an alkali metal bicarbonate, an alkali metal carbonate or an alkali metal sulphonate.

8. Process according to claim 6, **characterised in that** the density-increasing agent is a potassium phosphate such as potassium pyrophosphate or potassium metaphosphate.

9. Process according to any one of the preceding claims, **characterised in that** the treatment composition comprises an antioxidant and/or antifungal active ingredient.

10. Process according to any one of the preceding claims, **characterised in that** the total time during which the fruits or vegetables (3) are fully immersed in the treatment composition is less than 10 minutes.

11. Apparatus for carrying out a process according to any one of the preceding claims, **characterised in that** it comprises:
- means for packing fruits or vegetables in containment means (4),
- means (16) for forming a bath of treatment composition (12) having a temperature between 40 and 60°C,
- means (18) for lowering and raising containment means (4), and
- an electronic unit controlling the means (18) for lowering and raising which is suitable both for controlling stages comprising:
- lowering the containment means (4) to fully immerse the fruits or vegetables (3) contained therein in the bath, and
- raising the containment means (4) to completely remove the fruits or vegetables (3) from the bath, and between these two stages for controlling intermediate stages comprising:
- raising the containment means (4) so that part of the fruit or vegetables (3) contained therein emerge from the bath and another part of the fruits or vegetables (3) contained therein remain immersed, and
- lowering the containment means (4) to again fully immerse the fruits or vegetables (3) contained therein in the bath.

12. Apparatus according to claim 11, **characterised in that** the control unit is suitable for controlling reproduction of the intermediate stages on the basis of a cycle having a period of between 2 seconds and 2 minutes.
